# EUROPEAN PATENT APPLICATION

(11) **EP 2 757 455 A1**
(43) Date of publication of application: **23.07.2014**
(21) Application number: 13151896.1
(22) Date of filing: 18.01.2013
(51) Int. Cl.: G06F 3/0488, G06F 3/038, G06F 3/041, G06K 9/00, G06K 9/22, G06F 3/0354

(54) **Method and apparatus pertaining to predicted stylus movements**

(71) Applicant: BlackBerry Limited, Waterloo, ON N2K 0A7 (CA)
(72) Inventor: Mankowski, Peter, Waterloo, Ontario N2L 3W8 (CA); Idzik, Jacek S., Waterloo, Ontario N2L 3W8 (CA); Mercea, Cornel, Waterloo, Ontario N2L 3W8 (CA); Rang, Weimin Michael, Waterloo, Ontario N2L 3W8 (CA); Nan, Yaran, Waterloo, Ontario N2L 3W8 (CA)
(74) Representative: Noble, Nicholas

(57) **Abstract**

An apparatus and method pertaining to the display of a stylus path that includes both a validated portion and a predicted portion. Upon determining an error between subsequent stylus movement and that predicted portion, these teachings provide for morphing a display of the predicted portion to accord with the subsequent stylus movement over time rather than abruptly switching the display to an immediately fully-corrected representation.

## Description

### Field of Technology

The present disclosure relates to electronic devices, and more particularly to electronic devices that display an electronic-ink line that corresponds to the movement of a stylus.

### Background

Some electronic devices have displays particularly configured to work with a corresponding stylus. Generally speaking, a stylus is typically a hand-held writing utensil that often (but not exclusively) has a pencil-like elongated form factor and that includes at least one pointed end configured to interact with a stylus-scribing surface. Using a stylus as an input mechanism with a display offers a variety of advantages over a fingertip including the opportunity for increased precision as well as an expression modality that accords with the user's own past experience with a pencil or pen.

In some cases the stylus comprises an active device that transmits a signal. This signal serves, for example, as a location beacon that the display device utilizes, for example, to confirm the proximity of the stylus and/or to facilitate accurate tracking of the stylus's movement with respect to the display. To conserve power, the stylus typically only transmits such a signal on an intermittent basis.

Unfortunately, the intermittent nature of location-beacon signal transmissions (and/or other signal sampling and processing delays) can lead to unwanted and inconsistent latency with respect to displaying the movement of the stylus across the display. Such latency can occur, for example, when the intermittent location-beacon signal arrives just after the display device refreshes the display presentation. In such a case, the representation of a line on the display that flows like ink in response to movement of the stylus across the display can lag the actual location of the stylus tip by a noticeable amount. This latency, in turn, can feel unnatural to the user and can defeat or at least impair the user's effective use of the stylus as an input mechanism.

It is known to attempt to overcome such latency by predicting the likely path of the stylus tip. By displaying a successfully predicted path the displayed result can remain closer to the stylus tip and hence yield a more natural experience for the user. Unfortunately, known prediction algorithms cannot yet always successfully predict where a user might next direct the stylus tip. Typical prior art approaches tend to display a predicted line until an error is detected. The depicted electronic ink line is then suddenly and abruptly corrected. While technically preserving an accurate rendering insofar as possible, this abrupt correction can be disconcerting and distracting to at least some users.

### Brief Description of the Drawings

FIG. 1 is an electronic ink representation in accordance with the prior art.

FIG. 2 is an electronic ink representation in accordance with the prior art.

FIG. 3 is a flow diagram in accordance with the disclosure.

FIG. 4 is a block diagram in accordance with the disclosure.

FIG. 5 is a top plan detail view in accordance with the disclosure.

FIG. 6 is an electronic ink representation in accordance with the disclosure.

FIG. 7 is an electronic ink representation in accordance with the disclosure.

FIG. 8 is an electronic ink representation in accordance with the disclosure.

FIG. 9 is a block diagram in accordance with the disclosure.

### Detailed Description

The following describes an apparatus and method pertaining to the display of a stylus path that includes both a validated portion and a predicted portion. Upon determining an error between subsequent stylus movement and that predicted portion, these teachings provide for morphing a display of the predicted portion to accord with the subsequent stylus movement over time rather than abruptly switching the display to a fully-corrected representation.

These teachings are highly flexible in practice and will accommodate, for example, use in conjunction with a predicted portion that represents predicted movement of the stylus over some predetermined number of sampling frames. As another example, these teachings will accommodate optionally determining a user-selected morphing state and then morphing (or even not morphing) the aforementioned display as a function, at least in part, of that user-selectable morphing state. By one approach, for example, a user-selectable morphing can comprise a selection of a particular morphing speed (i.e., a speed at which the displayed electronic ink line moves from a known erroneous location to a known corrected location).

So configured, a corresponding electronic device can utilize a predicted-path algorithm (or algorithms) of choice. When and if a given displayed predicted line of electronic ink proves inaccurate, these teachings permit the line to more gradually change from the displayed prediction to the known correct path. This gradual change, in turn, helps to avoid the potentially jarring and sometimes disconcerting effect of the sudden snap-to-correction effect employed so often in the prior art.

These teachings are highly scalable and will accommodate as small or wide a range of morphing speeds and/or types as may be appropriate to suit the needs of a given application setting. These teachings are also readily employed in conjunction with existing fielded platforms and component architectures and hence can serve to leverage those platforms in favor of continued utility and viability.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

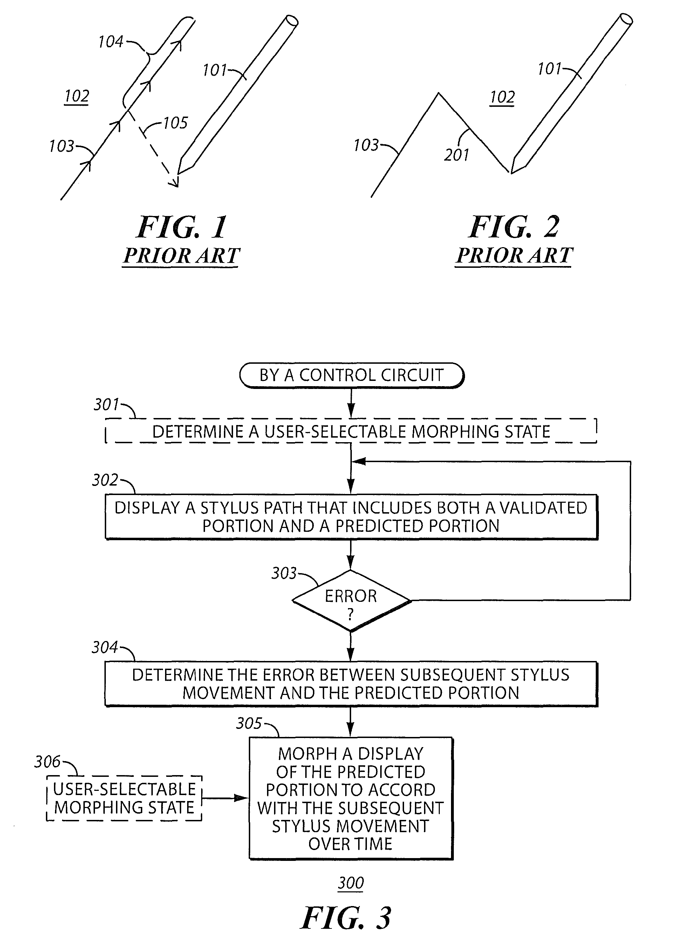

Prior to providing more details regarding the present teachings it may be helpful to first review in more detail a particular practice as tends to characterize the prior art. FIG. 1 depicts in a somewhat simplistic manner a line being rendered on a display 102 as a stylus 101 moves along a scribing surface that corresponds to that display 102. In this example this line includes a validated portion 103 and a predicted portion 104. Per this simple example, this predicted portion 104 simply comprises a linear extension of the prior validated portion 103. The stylus 101, however, has in fact veered sharply at an acute angle as represented by the dashed line denoted by reference numeral 105.

As illustrated in FIG. 2, upon determining the error represented by the aforementioned predicted portion 104, the rendered line of electronic ink immediately shifts (via re-rendering) to a corrected position 201. This change occurs as a step function and hence presents an abrupt switch from the predicted portion 104 shown in FIG. 1 to the corrected portion 201 shown in FIG. 2.

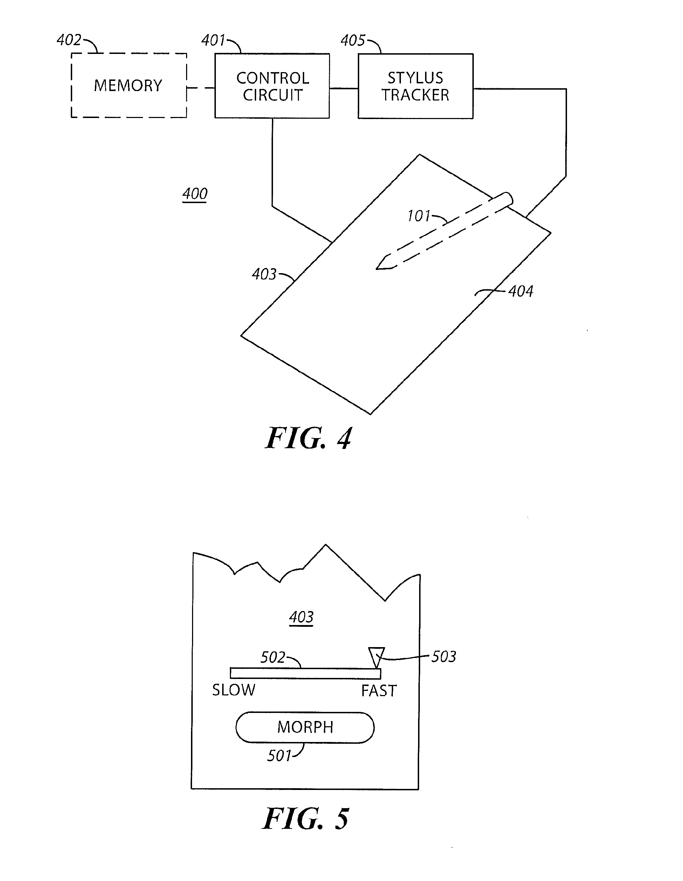

FIG. 3 presents a process 300 that corresponds at least in part to the present teachings. For the sake of an illustrative example it will be presumed here that a control circuit of choice carries out the illustrated process 300. Again for the sake of illustration and without necessarily intending any limitations by way of the specificity of the presented details, such a control circuit 401 may comprise a part of an apparatus such as an electronic device 400 as shown in FIG. 4.

Such a control circuit 401 can comprise a fixed-purpose hard-wired platform or can comprise a partially or wholly programmable platform. These architectural options are well known and understood in the art and require no further description here. This control circuit 401 is configured (for example, by using corresponding programming as will be well understood by those skilled in the art) to carry out one or more of the steps, actions, and/or functions described herein.

By one optional approach this control circuit 401 operably couples to a memory 402. The memory 402 may be integral to the control circuit 401 or can be physically discrete (in whole or in part) from the control circuit 401 as desired. This memory 402 can serve, for example, to non-transitorily store the computer instructions that, when executed by the control circuit 401, cause the control circuit 401 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM).)

In this illustrative example the control circuit 401 also operably couples to a display 403 that also shares its form factor with a stylus-scribing surface 404 such that the display 403 and the stylus-scribing surface 404 comprise an integrated component. A stylus tracker 405 in turn operably couples to the control circuit 401 and to the stylus-scribing surface 404 and serves to track the position and movement of a stylus 101 (such as a scribing tip thereof) with respect to the stylus-scribing surface 404. Various stylus tracking techniques and approaches are known in the art. As the present teachings are not overly sensitive regarding any particular selections in these regards, for the sake of brevity this description will not be burdened with further details about such stylus tracking techniques.

So configured, scribing interactions between the stylus 101 and the stylus-scribing surface 404 are tracked 405 and the control circuit 401 in turn uses that tracking information to cause a corresponding presentation of electronic ink on the display 403. In a typical modem application setting there is often latency between a present location of the stylus 101 and the display of electronic ink that corresponds to the stylus's location. It is therefore presumed for the purposes of this illustrative example that the control circuit 401 employs one or more prediction algorithms to predict near-term movement of the stylus 101 to thereby permit displaying electronic ink ahead of actually knowing the precise location of the stylus 101. Again, there are various prediction approaches known in the art and hence further description regarding such approaches is not provided here.

As mentioned above these teachings serve to morph a display of a predicted portion of a rendered line of electronic ink to accord with actual movement of a corresponding stylus. Referring to FIGS. 3 and 5, by one optional approach these teachings will accommodate determining at 301 a user-selectable morphing state. As shown in FIG. 5, by one approach the aforementioned display 403 can offer a morphing enablement button 501. So configured, a user can select, for example, either an enabled state or a disabled state regarding the use of the morphing capability described herein. This capability, in turn, will permit a user to choose an approach that best suits their needs and personal proclivities in these regards.

By another approach, in lieu of the foregoing or in combination therewith, the user-selectable morphing state can comprise a choice amongst candidate states that include at least two morphing speeds. As illustrated by way of example in FIG. 5, such a choice can comprise a bar 502 representing various morphing speeds and a selection marker 503 that the user can selectively move to thereby designate a particular morphing speed.

The present teachings are highly flexible in practice. Accordingly, it will be understood that the foregoing examples of particular user-selectable morphing states are intended to serve an illustrative purpose and are not intended to suggest any limitations in these regards.

Referring now to FIGS. 1 and 3, at 302 this process 300 provides for displaying (on the display 403 and employing electronic ink) a stylus path that includes both a validated portion 103 and a predicted portion 104 notwithstanding that the stylus 101 has, in fact, veered off the predicted path as described above with respect to FIG. 1. It may be noted here that in some cases the aforementioned predicted portion 104 will represent predicted movement of the stylus 101 over some predetermined number of sampling frames (such as two or more consecutive sampling frames). (Those skilled in the art will recognize and understand that a given stylus tracker 405 may parse its tracking activities over a series of samples of information that each pertain to a present sensed location of the stylus 101 with respect to the stylus-scribing surface 404 at a given corresponding point in time. The present teachings are readily employed in such an application setting and to some extent the benefits of the described approaches can become more pronounced as the number of sampling frames as correspond to a predicted result increases.)

At 303 the control circuit 401 detects that a corresponding presentation error has occurred and at 304 the control circuit 401 determines the error between subsequent stylus 101 movement and the predicted portion 104. By one approach, this error can be represented, for example, by the display coordinates for the actual positions of the stylus 101 given the benefit of now-available hindsight.

At 305 the control circuit 401 then morphs the display of the predicted portion to accord with the subsequent actual movement of the stylus 101 over time. Specifically, this morphing comprises gradually reshaping the display of the predicted portion over time until the displayed electronic ink accords with the actual movement of the stylus 101.

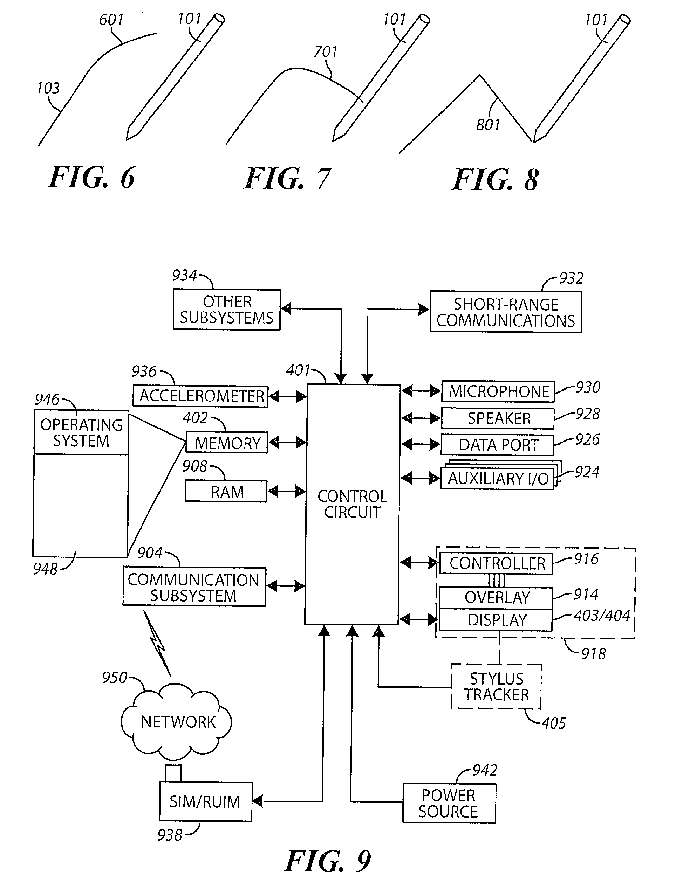

FIGS. 6 through 8 provide a simple and non-limiting example in these regards. Presuming that the stylus 101 veered sharply down and to the right as shown in FIG. 1, FIG. 6 depicts (at reference numeral 601) the predicted portion of the line as beginning to curve downwardly and to the right. A short time later, and as illustrated at FIG. 7, the predicted portion has continued to move downwardly and to the right as denoted by reference numeral 701. Finally, and as illustrated at FIG. 8, the morphing portion of the line (as denoted by reference numeral 801) has concluded its migration and now accords with the actual traversal pathway of the stylus 101.

As mentioned earlier, this process 300 will accommodate using one or more user-selectable morphing states 306. For example, when the user has selected a particular morphing speed, the aforementioned movement of the predicted portion of the rendered line can occur at the selected speed. For example, the aforementioned morphing could happen at a speed of, say, .05 seconds, 0.1 seconds, 0.25 seconds, or at essentially any other speed of choice.

The implementing electronic device can comprise any of a wide variety of electronic devices. For example, the portable electronic device can comprise a portable communications device as illustrated in FIG. 9. This portable communications device can include, for example, the aforementioned control circuit 401. Corresponding communication functions, including data and voice communications, can be performed through a communication subsystem 904 that operably couples to the control circuit 401. The communication subsystem receives messages from and sends messages to a wireless network 950 of choice.

The wireless network 950 may be any type of wireless network, including, but not limited to, a wireless data networks, a wireless voice network, or a network that supports both voice and data communications. The control circuit 401 may also operably couple to a short-range communication subsystem 932 (such as an 802.11 or 802.16-compatible transceiver and/or a Bluetooth^{™}-compatible transceiver). To identify a subscriber for network access, the portable electronic device may utilize a Subscriber Identity Module or a Removable User Identity Module (SIM/RUIM) card 938 for communication with a network, such as the wireless network 950. Alternatively, user identification information may be programmed into the aforementioned memory 402.

A power source 942, such as one or more rechargeable batteries or a port to an external power supply, powers the electronic device. The control circuit 401 may interact with an accelerometer 936 that may be utilized to detect direction of gravitational forces or gravity-induced reaction forces. The control circuit 401 may also interact with a variety of other components, such as a Random Access Memory (RAM) 908, an auxiliary input/output (I/O) subsystem 924, a data port 926, a speaker 928, a microphone 930, and other device subsystems 934 of choice.

The aforementioned display 403 can be disposed in conjunction with a touch-sensitive overlay 914 that operably couples to an electronic controller 916. Together these components can comprise a touch-sensitive display 918 that serves as a graphical-user interface. Information, such as text, characters, symbols, images, icons, and other items may be displayed on the touch-sensitive display 918 via the control circuit 401. By one approach this touch-sensitive overlay 914 may suffice to track the location and movement of the stylus 101. By another approach, if desired, the aforementioned stylus tracker 405 can comprise a separate component.

The portable electronic device can include an operating system 946 and software programs, applications, or components 948 that are executed by the control circuit 401 and that are stored, for example, in the above-mentioned memory 402. Additional applications or programs may be loaded onto the portable electronic device through the wireless network 950, the auxiliary I/O subsystem 924, the data port 926, the short-range communications subsystem 932, or any other suitable subsystem 934.

The approaches described herein permit the use of predication techniques to counteract latency concerns as regards the near real time display of electronic ink that corresponds to the movement of a corresponding stylus while also avoiding the potential distractions and cognitive disruptions of also displaying immediate one-step corrections when the prediction proves inaccurate. In particular, these teachings can utilize the detection of changes of speed with respect to the movement of a stylus to scale one or more prediction behaviors. For example, when a user accelerates stylus movement while moving the stylus in a relatively straight path the prediction algorithm can extend its "best guess" by up to, for example, four screen refreshes. An opposite response can occur, however, when the stylus decelerates. In this case the algorithm need not guess as many frames ahead of the current frame and can scale back, for example, to predictions that reach ahead only two frames or even only one frame.

In more extreme cases (when, for example, the stylus moves very slowly or the user's handwriting is extremely small), the described scaled metering of prediction behavior can be temporarily disabled due its lack of present usefulness. Generally speaking, the slower the movement of the stylus, the easier it is for prior art teachniques to keep up with the user's movement of the stylus in a visually non-disturbing manner.

The present teachings can be economically deployed and will accommodate placing a significant amount of morphing performance control in the hands of the user if desired. These teachings are also highly flexible in practice and will accommodate a wide variety of stylus-tracking methodologies as well as various stylus-movement prediction methodologies.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
by a control circuit (401):
displaying (302) a stylus path that includes both a validated portion (103) and a predicted portion (104);
determining (304) an error between subsequent stylus movement and the predicted portion (104);
morphing (305) a display of the predicted portion to accord with the subsequent stylus movement over time.

2. The method of claim 1 wherein the predicted portion (104) represents predicted movement of the stylus (101) over a predetermined number of sampling frames.

3. The method of claim 2 wherein the predetermined number of sampling frames comprises at least two sampling frames.

4. The method of claim 1 wherein displaying the stylus path comprises displaying the stylus path on a touch-sensitive display (918).

5. The method of claim 1 further comprising:
by the control circuit (401):
determining a user-selectable morphing state (306);
and wherein morphing the display comprises morphing the display as a function, at least in pant, of the user-selectable morphing state.

6. The method of claim 5 wherein the user-selectable morphing state comprises a choice between at least an enabled state and a disabled state.

7. The method of claim 5 wherein the user-selectable morphing state comprises a choice amongst candidate states that includes at least two morphing speeds.

8. An apparatus comprising:
a display (403);
a stylus-scribing surface (404);
a stylus tracker (405) configured to track movement of a stylus (101) with respect to the stylus-scribing surface (404);
a control circuit (401) operably coupled to the display (403) and the stylus tracker (405) and configured to:
display (302) on the display (403) a stylus path that includes both a validated portion (103) and a predicted portion (104);
determine (304) an error between subsequent stylus movement and the predicted portion (104);
morph (305) a display on the display (403) of the predicted portion (104) to accord with the subsequent stylus (101) movement over time.

9. The apparatus of claim 8 wherein the predicted portion (104) represents predicted movement of the stylus (101) over a predetermined number of sampling frames.

10. The apparatus of claim 9 wherein the predetermined number of sampling frames comprises at least two sampling frames.

11. The apparatus of claim 8 wherein the display (403) and the stylus-scribing surface (404) comprise an integrated component.

12. The apparatus of claim 8 further comprising:
a user-selectable morphing state interface;
and wherein the control circuit (401) is configured to morph the display (102) by morphing the display (102) as a function, at least in part, of the user-selectable morphing state.

13. The apparatus of claim 12 wherein the user-selectable morphing state comprises a choice between at least an enabled state and a disabled state.

14. The apparatus of claim 12 wherein the user-selectable morphing state comprises a choice amongst candidate states that includes at least two morphing speeds.

## Amended claims

### Amended claims in accordance with Rule 137(2) EPC.

**1.** A method comprising:
by a control circuit (401):
displaying (302) a stylus path that includes both a validated portion (103) and a predicted portion (104);
determining (304) an error between subsequent stylus movement and the predicted portion (104);
morphing (305) a display of the predicted portion to accord with the subsequent stylus movement over time by gradually reshaping the display of the predicted portion over time until the displayed stylus path accords with the actual movement of the stylus.

**2.** The method of claim 1 wherein the predicted portion (104) represents predicted movement of the stylus (101) over a predetermined number of sampling frames.

**3.** The method of claim 2 wherein the predetermined number of sampling frames comprises at least two sampling frames.

**4.** The method of claim 1 wherein displaying the stylus path comprises displaying the stylus path on a touch-sensitive display (918).

**5.** The method of claim 1 further comprising:
by the control circuit (401):
determining a user-selectable morphing state (306);
and wherein morphing the display comprises morphing the display as a function, at least in part, of the user-selectable morphing state.

**6.** The method of claim 5 wherein the user-selectable morphing state comprises a choice between at least an enabled state and a disabled state.

**7.** The method of claim 5 wherein the user-selectable morphing state comprises a choice amongst candidate states that includes at least two morphing speeds.

**8.** An apparatus comprising:
a display (403);
a stylus-scribing surface (404);
a stylus tracker (405) configured to track movement of a stylus (101) with respect to the stylus-scribing surface (404);
a control circuit (401) operably coupled to the display (403) and the stylus tracker (405) and configured to:
display (302) on the display (403) a stylus path that includes both a validated portion (103) and a predicted portion (104);
determine (304) an error between subsequent stylus movement and the predicted portion (104);
morph (305) a display on the display (403) of the predicted portion (104) to accord with the subsequent stylus (101) movement over time by gradually reshaping the display of the predicted portion over time until the displayed stylus path accords with the actual movement of the stylus.

**9.** The apparatus of claim 8 wherein the predicted portion (104) represents predicted movement of the stylus (101) over a predetermined number of sampling frames.

**10.** The apparatus of claim 9 wherein the predetermined number of sampling frames comprises at least two sampling frames.

**11.** The apparatus of claim 8 wherein the display (403) and the stylus-scribing surface (404) comprise an integrated component.

**12.** The apparatus of claim 8 further comprising:
a user-selectable morphing state interface;
and wherein the control circuit (401) is configured to morph the display (102) by morphing the display (102) as a function, at least in part, of the user-selectable morphing state.

**13.** The apparatus of claim 12 wherein the user-selectable morphing state comprises a choice between at least an enabled state and a disabled state.

**14.** The apparatus of claim 12 wherein the user-selectable morphing state comprises a choice amongst candidate states that includes at least two morphing speeds.
